(19) Europäisches Patentamt
European Patent Office
Office européen des brevets

(11) Veröffentlichungsnummer: **0 080 431**
**B1**

(12) # EUROPÄISCHE PATENTSCHRIFT

(45) Veröffentlichungstag der Patentschrift: **24.09.86**

(21) Anmeldenummer: **82810424.0**

(22) Anmeldetag: **12.10.82**

(51) Int. Cl.4: **C 09 K 15/30**, C 08 K 5/34, C 08 K 5/35, C 08 G 73/06, C 07 D 211/46, C 07 D 211/58, C 07 D 211/62, C 07 D 471/10, C 07 D 498/10 // (C07D471/10, 235:00, 221:00), (C07D498/10, 263:00, 221:00)

(54) **Synergistisches Gemisch von niedermolekularen und hochmolekularen Polyalkylpiperidinen.**

(30) Priorität: **16.10.81 CH 6623/81**

(43) Veröffentlichungstag der Anmeldung: **01.06.83 Patentblatt 83/22**

(45) Bekanntmachung des Hinweises auf die Patenterteilung: **24.09.86 Patentblatt 86/39**

(84) Benannte Vertragsstaaten: **BE CH DE FR GB IT LI NL**

(56) Entgegenhaltungen:
**EP-A-0 013 665**
**DE-A-2 636 130**
**DE-A-2 719 131**
**DE-A-2 730 449**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Gugumus, François, Dr., Burgfeldermattweg 17, CH- 4123 Allschwil (CH)**

EP 0 080 431 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft die Kombination von niedermolekularen und hochmolekularen Polyalkylpiperidinen als Stabilisatorsystem für organisches Material, sowie das damit geschützte organische Material.

Niedermolekulare Polyalkylpiperidine sind in den vergangenen Jahren in zahlreichen Publikationen als Lichtschutzmittel beschrieben worden. So ist z.B. in der US-PS 4.038.280 eine wichtige Klasse von sterisch gehinderten Piperidinen beschrieben worden, welche der allgemeinen Formel

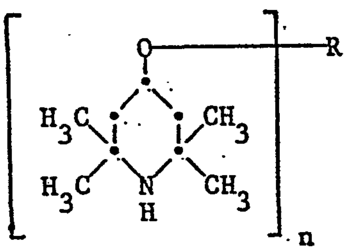

entspricht, worin n eine Zahl von 1 bis 3 und R ein 1-3 wertiger Kohlenwasserstoffrest bedeutet.

In jüngerer Zeit sind auch verschiedene hochmolekulare Polyalkylpiperidine bekannt geworden, welche sich als Lichtschutzmittel eignen. So wurden z.B. aus der US-PS 4.233.412 sterisch gehinderte Piperidingruppen enthaltende Kondensations- und Additionspolymere, aus der US-PS 4.210.612 sterisch gehinderte Piperidingruppen enthaltende Polyacrylate, und aus der US-PS 4.086.204 sterisch gehinderte Piperidingruppen enthaltende Triazinpolymere bekannt.

Es wurde auch nach synergistischen Gemischen gesucht, worin eine Komponente ein sterisch gehindertes Piperidin und die andere Komponente beispielsweise ein herkömmlicher UV-Absorber ist. Solche Gemische sind beispielsweise aus der US-PS 4.110.304 bekannt, worin Gemische eines niedermolekularen Polyalkylpiperidins mit Benzophenonen, Benztriazolen, Oxalsäuredianiliden oder Salicylsäurederivaten beschrieben ist.

Es wurde nun gefunden, dass Mischungen von niedermolekularen und hochmolekularenpolyalkylpiperidinen in ihrer Lichtschutzwirksamkeit einen ausgeprägten Synergismus aufweisen. Der Fachmann konnte diese Wirkungssteigerung nicht vorhersehen, da es sich um eine Kombination von Lichtschutzmitteln handelt, welche dem gleichen Wirkungsprinzip entsprechen und sich nur durch das verschiedene Molekulargewicht unterscheiden. Uebliche synergistische Gemische bestehen aus Substanzen, die sich struktur- und wirkungsmässig stark unterscheiden, wie es z.B. für phenolische Antioxidantien und sogenannte Thiosynergisten bekannt ist.

Die vorliegende Erfindung betrifft ein Stabilisatorsystem enthaltend (A) ein niedermolekulares sterisch gehindertes Polyalkylpiperidin ausgewählt aus der Gruppe bestehend aus den Verbindungen der Formeln (A-1) bis (A-12)

$R_1$-OC(O)-$(CH_2)_8$-C(O)O-$R_1$ (A-1), $R_2$-OC(O)-$(CH_2)_8$-C(O)O$R_2$ (A-2),
$R_1$-NH-$(CH_2)_6$-NH-$R_1$ (A-3), $R_2$-$OCH_2CH=CHCH_2$-O-$R_2$ (A-4),
$R_1$-OC(O)-N($R_1$)-($CH_2$) -N($R_1$)C(O)O-$R_1$ (A-5), $R_1$-O-Si$(CH_3)_2$-O-$R_1$ (A-6)

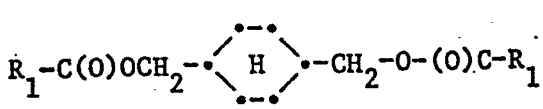 (A-7),

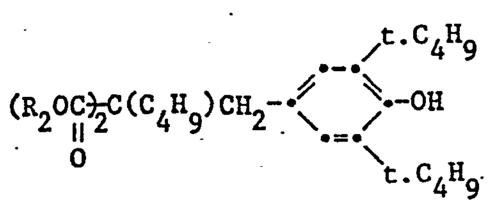 (A-8), 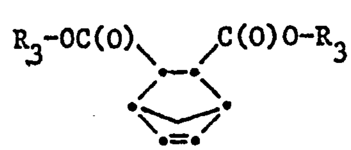 (A-9)

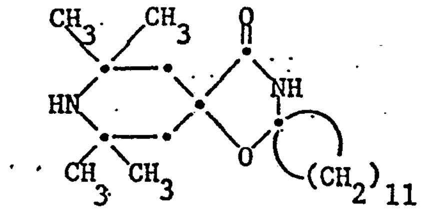 (A-10), 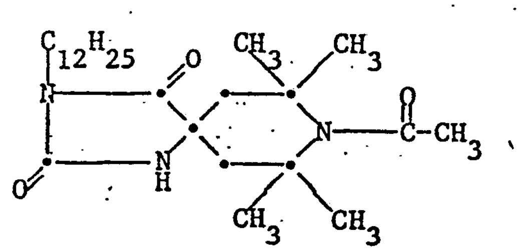

(A-11),

$R_1-NH-C(O)-(CH_2)_8-C(O)-NH-R_1$ (A-12)

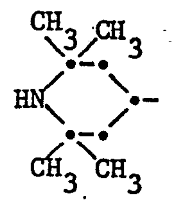 ,

worin $R_1$ eine Gruppe der Formel

$R_2$ eine Gruppe der Formel 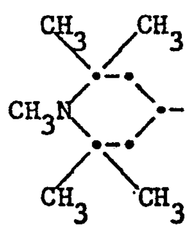 und $R_3$ eine Gruppe der Formel

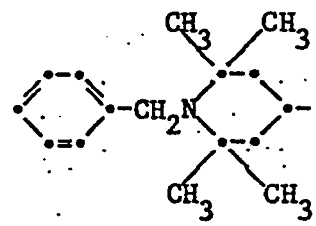 bedeutet,

bedeutet,

und (B) ein hochmolekulares sterisch gehindertes Polyalkylpiperidin ausgewählt aus der Gruppe bestehend aud Verbindungen mit einer der wiederkehrenden Einheiten der Formeln (B-1) bis (B-9)

$$-\!\!\left[-CH(COO-R_2)-CH_2-\right]\!\!-$$

(B-1)

mit Polymerisationsgrad 5-100, bevorzugt 5-50, insbesondere 10-25

$$-\!\!\left[-N(R_1)-(CH_2)_6-N(R_1)-CH_2)_2-\right]\!\!-$$

(B-2)

mit Polymerisationsgrad 5-50, bevorzugt 5-25, insbesondere 5-15

$$-\!\!\left[-CH(COO-R_1)-CH_2-\right]\!\!- \quad -\!\!\left[-CH_2-CH_2-\right]\!\!-$$

(I) (II)

(B-3)

mit Molverhältnis I:II = 1:10 bis 1:20 und Molekulargewicht zwischen 10000 und 30000

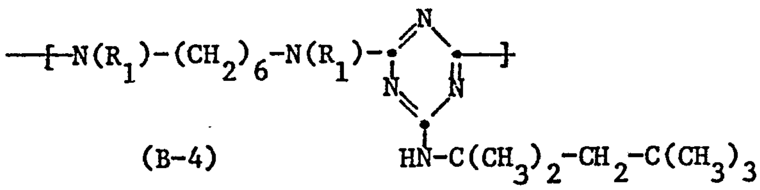

(B-4)

mit Polymerisationsgrad 3-50, bevorzugt 3-25, insbesondere 3-8

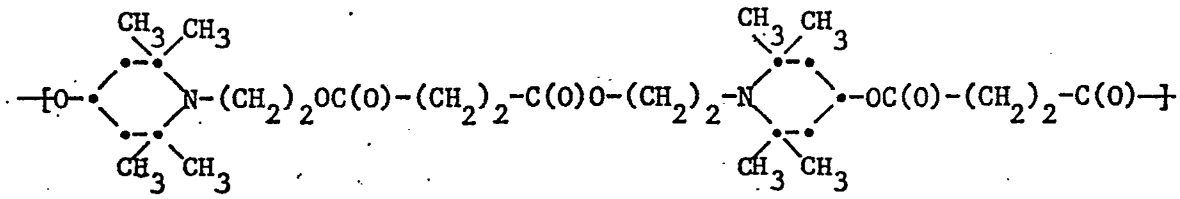

(B-5)

mit Polymerisationsgrad 2-25, bevorzugt 2-12, insbesondere 2-7

$$-\!\!\left[N(R_1)-(CH_2)_6-N(R_1)-C(O)-(CH_2)_4-C(O)\right]\!\!-$$

(B-6)

mit Polymerisationsgrad 5-50, bevorzugt 5-25, insbesondere 5-15

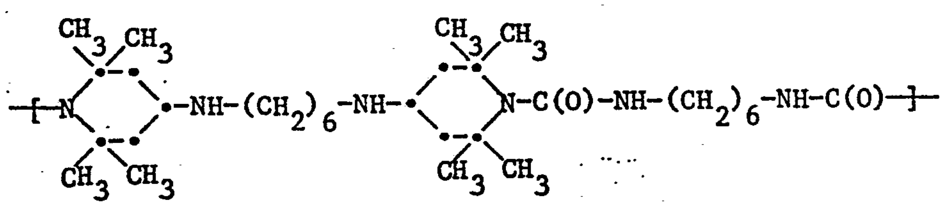

(B-7)

mit Polymerisationsgrad 5-50, bevorzugt 2-25, insbesondere 5-15

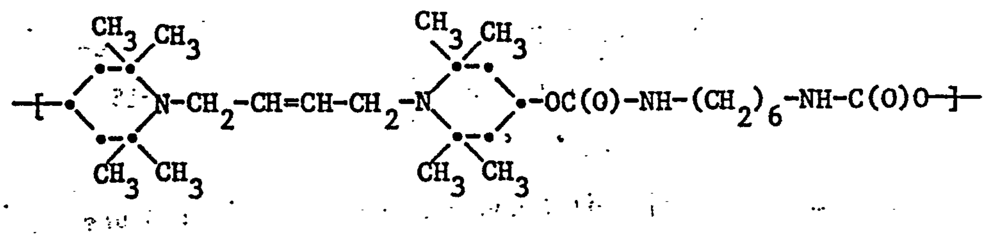

(B-8)

mit Polymerisationsgrad 5-50, bevorzugt 5-25, insbesondere 5-15

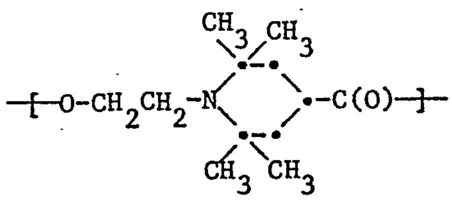

(B-9)

mit Polymerisationsgrad 5-50, bevorzugt 5-25, insbesondere 5-15

sowie aus der Verbindung der Formel B-10

$$R_4NH(CH_2)_3-N(R_4)-(CH_2)_2-N(R_4)-(CH_2)_3-NHR_4$$

(B-10)

wobei $R_1$ und $R_2$ die oben angegebene Bedeutung haben und $R_4$ eine Gruppe

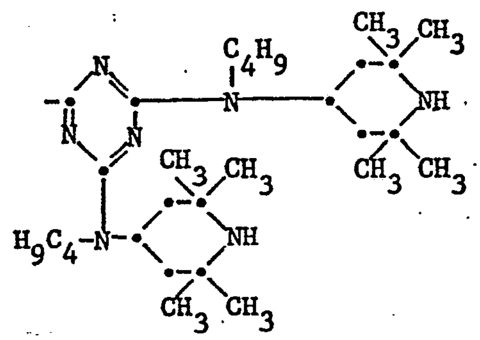 ist.

Von den Komponenten (A) werden die Verbindungen (A-1), (A-2), (A-5), (A-7), (A-8), (A-10), (A-11) bevorzugt und insbesondere die Verbindungen (A-1), (A-5), (A-8), (A-10) und (A-11).

Von den Komponenten (B) werden die Verbindungen (B-1), (B-2), (B-3), (B-4), (B-5), (B-6) und (B-10) besonders bevorzugt.

Das gemeinsame Merkmal der Mischungen der Komponenten (A) und (B) ist, dass sich (A) durch ein deutlich niedrigeres Molekulargewicht verglichen mit (B) auszeichnet, und dass alle Verbindungen (A) und (B) Polyalkylpiperidinderivate darstellen, und somit z.B. einen der Reste $R_1$, $R_2$, $R_3$ oder $R_4$ enthalten.

Die Verbindungen (A) und (B) sind bekannte Substanzen und können nach bekannten Methoden hergestellt werden.

Das Verhältnis von (A):(B) ist in breiten Grenzen wählbar. Besonders deutlich wird der Synergismus allerdings in Mischungen, in welchen das Verhältnis (A):(B) 10:1 bis 1:10, vorzugsweise 5:1 bis 1:5 und insbesondere 1:2 bis 2:1 beträgt.

Die Verbindungen (A) und (B) werden dem zu schützenden organischen Material in einer totalen Konzentration von 0,01 bis 5 Gew.-%, berechnet auf das zu schützende Material, zugesetzt. Vorzugsweise werden 0,03 bis 1,5 Gew.%, besonders bevorzugt 0,2 bis 0,6 Gew.% der Verbindungen eingearbeitet.

Die Einarbeitung kann vor oder nach der Polymerisation erfolgen, beispielsweise durch Einmischen der Verbindungen und gegebenenfalls weiterer Additive in die Schmelze nach den in der Technik üblichen Methoden, vor oder während der Formgebung, oder auch durch Aufbringen der gelösten oder dispergierten Verbindungen auf das Polymere, gegebenenfalls unter nachträglichem Verdunsten des Lösungsmittels.

Die neuen Verbindungen können auch in Form eines Masterbatches, der diese Verbindungen beispielsweise in einer Konzentration von 2,5 bis 25 Gew.-% enthält, dem zu stabilisierenden Material zugesetzt werden.

Im Fall von vernetztem Polyäthylen können die Verbindungen vor der Vernetzung beigefügt werden.

Die Mischungen einer oder mehrerer Verbindungen (A) und einer oder mehrerer Verbindungen (B) eignen sich zum Stabilisieren von organischem Material gegen deren Schädigung durch Einwirkung von Sauerstoff, Wärme und Licht. Als Beispiele so zu schützender organischer Materialien sind zu nennen:

1. Polymere von Mono- und Diolefinen, beispielsweise Polyäthylen (das gegebenenfalls vernetzt sein kann), Polypropylen, Polyisobutylen, Polybuten-I, Polymethylpenten-1, Polyisopren oder Polybutadien sowie Polymerisate von Cycloolefinen wie z.B. von Cyclopenten oder Norbornen.

2. Mischungen der unter 1) genannten Polymeren, z.B. Mischungen von Polypropylen mit Polyäthylen oder mit Polyisobutylen.

3. Copolymere von Mono- und Diolefinen untereinander oder mit anderen Vinylmonomeren, wie z.B. Aethylen-Propylen-Copolymere, Propylen-Buten-I-Copolymere, Propylen- Isobutylen-Copolymere, Aethylen-Buten-1-Copolymere, Propylen-Butadien-Copolymere, Isobutylen-Isopren-Copolymere, Aethylen-Alkylacrylat-Copolymere, Aethylen-Alkylmethacrylat -Copolymere, Aethylen-Vinylacetat-Copolymere oder Aethylen-Acrylsäure-Copolymere und deren Salze (Ionomere), sowie Terpolymere von Aethylen mit Propylen und einem Dien, wie Hexadien, Dicyclopentadien oder Aethylidennorbornen.

4. Polystyrol.

5. Copolymere von Styrol oder α-Methylstyrol mit Dienen oder Acrylderivaten, wie z.B. Styrol-Butadien, Styrol-Acrylnitril, Styrol-Aethylmethacrylat, Styrol-Butadien-Aethylacrylat, Styrol-Acrylnitril-Methylacrylat; Mischungen von hoher Schlagzähigkeit aus Styrol-Copolymeren und einem anderen Polymer wie z.B. einem Polyacrylat, einem Dien-Polymeren oder einem Aethylen-Propylen-Dien-Terpolymeren; sowie Block-Copolymere des Styrols, wie z.B. Styrol-Butadien-Styrol, Styrol-Isopren-Styrol, Styrol-Aethylen/Butylem-Styrol oder Styrol-Aethylen/Propylen-Styrol.

6. Propfcopolymere von Styrol, wie z.B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Aethylen-Propylen-Dien-Terpolymeren, Styrol und Acrylnitril auf

Polyalkylacrylaten oder Polyalkylmethacrylaten, Styrol und Acrylnitril auf Acrylat-Butadien-Copolymeren, sowie deren Mischungen mit den unter 5) genannten Copolymeren, wie z.B. als sogenannte ABS, MBS, ASA oder AES-Polymere bekannt sind.

7. Halogenhaltige Polymere, wie z.B. Polychloropren, Chlorkautschuk, chloriertes oder chlorsulfoniertes Polyäthylen Epichlorhydrin-homound -copolymere, insbesondere Polymere aus halogenhaltigen Vinylverbindungen, wie z.B. Polyvinylchlorid, Polywinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.

8. Polymere, die sich von α,β-ungesättigten Säuren und deren Derivaten ableiten, wie Polyacrylate und Polymethacrylate, Polyacrylamide und Polyacrylnitrile.

9. Copolymere der unter 8) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyacrylat-Copolynere, Acrylnitril-Vinylhalogenid-Copolymere, oder Acrylmitril-Alkylmethacrylat-Butadien-Terpolymere.

10. Polymere, die sich von ungesättigten Alkoholen und Aninen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin.

11. Homo- und Copolynere von cyclischen Aethern, wie Polyäthylenglykole, Polyäthylenoxyd, Polypropylenoxyd oder deren Copolymere mit Bisglycidyläthern.

12. Polyacetale, wie Polyoxymethylen, sowie solche Polyoxymethylene, die Comonomere wie z.B. Aethylenoxyd enthalten.

13. Polyphenylenoxyde und -sulfide.

14. Polyurethane, die sich von Polyäthern, Polyestern und Polybutadienen mit endständigen Hydroxylgruppen einerseits und aliphatischen oder aromatischen Polyisocyanaten andererseits ableiten sowie deren Vorprodukte (Polyisocyanate Polyole Präpolymere).

15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethylhexamethylenterephthal-amid, Poly-m-phenylenisophthalamid, sowie deren Copolymere mit Polyäthern wie z.B. mit Polyäthylenglykol, Polypropylenglykol oder Polytetramethylenglykol.

16. Polyharnstoffe, Polyimide und Polyamid-imide.

17. Polyester, die sich von Dicarbonsäuren und Diolem und/oder von Hydroxycarbonsäuren oder den entsprechenden Lactonen ableiten, wie Polyäthylenterephthalat, Polybutylenterephthalat, Poly-1,4-dimethylolcyclohexanterephthalat, Poly-(2,2-bis(4-hydroxyphenyl)-propan-)tere-phthalat, Polyhydroxybenzoate, sowie Block-Polyäther-ester, die sich von Polyäthylen mit Hydroxyendgruppen, Dialkoholen und Dicarbonsäuren ableiten.

18. Polycarbonate.

19. Polysulfone und Polyäthersulfone.

20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

21. Trocknende und nicht trocknende Alkydharze.

22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

23. Vernetzbare Acrylharze, die sich von substituierten Acrylsäureestern ableiten wie z.B. von Epoxyacrylaten, Urethan-acrylaten oder Polyester-acrylaten.

24. Alkydharze, Polyesterharze und Acrylatharze, die mit Melaminharzen, Harnstoffharzen, Polyisocyanaten oder Epoxidharzen vernetzt sind.

25. Vernetzte Epoxidharze, die sich von Polyepoxiden ableiten, z.B. von Bis-glycidyläthern oder von cycloaliphatischen Diepoxiden.

26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseäther, wie Methylcellulose.

Die so stabilisierten organischen Materialien sind vorzugsweise organische Polymere, welche in verschiedenster Form angewendet werden können, so z.B. als Formkörper, Folien, Fasern, Schaume, Profile, Ueberzugsmittel oder als Bindemittel für Lacke Klebemittel oder Kitte.

Die erfindungsgemässen Stabilisatorsysteme können zusammen mit andern Zusatzstoffen verwendet werden, welche in üblichen Konzentrationen eingesetzt werden. Beispiele dafür sind:

**1. Antioxidantien**

<u>1.1. Alkylierte Monophenole</u>

2,6-Di-tert.butyl-4-methylphenol

2-Tert.butyl-4,6-dimethylphenol
2,6-Di-tert.butyl-4-äthylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

1.2 Alkylierte Hydrochinone

2,6-Di-tert.butyl-4-methoxyphenol
2,5-Di-tert.butyl-hydrochinon
2,5-Di-tert.amyl-hydrochinon

1.3. Hydroxylierte Thiodiphenyläther

2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. Alkyliden-Bisphenole

2,2'-Methylen-bis-(6-tert.butyl-4-methylphenol)
2,2'-Methylen-bis-(6-tert.butyl-4-äthylphenol)
2,2'-Methylen-bis-(4-methyl-6-(α-methylcyclohexyl)-phenol)
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Aethyliden-bis-(4,6-di-tert.butylphenol)
2,2'-Aethyliden-bis-(6-tert.butyl-4-isobutylphenol)
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercapto-butan
Aethylenglycol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-6'tert.butyl-4-methyl-phenyl]-terephthalat.

1.5. Benzylverbindungen

1,3,5-Tri-(3,5-di-tert.butyl-4-hydroxybenzyl)-2,4,6-trimethylbenzol Di-(3,5-di-tert.butyl-4-hydroxybenzyl)sulfid
3,5-di-tert.butyl-4-hydroxybenzyl-mercaptoessigsäure-isooctylester Bis-(4-tert.butyl-3-hydroxy-2,6-dimethylbenzyl)-dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
3,5-Di-tert.butyl-4.hydroxybenzyl-phosphonsäure-monoäthylester, Calcium-salz.

1.6. Acylaminophenole

4-Hydroxy-laurinsäureanilid
4-Hydroxy-stearinsäureanilid
2,4-Bis-octylmercapto-6-(3,5-di-tert.butyl-4-hydroxyanilino)-S-triazin

1.7. Ester der β-(3,5-Di-tert.butyl-4-hydroxyphenyl)-propionsäure

mit ein- oder mehrwertigen Alkoholen, wie z.B. mit
Methanol Diäthylenglycol
Octadecanol Triäthylenglycol
1,6-Hexandiol Pentaerythrit
Neopentylglycol Tris-hydroxyäthyl-isocyanurat
Thiodiäthylenglycol Di-hydroxyäthyl-oxalsäurediamid

1.8. Ester der β(5-tert.butyl-4-hydroxy-3-methylphenyl)-propionsäure

mit ein- oder mehrwertigen Alkoholen, wie z.B. mit
Methanol Diäthylenglycol
Octadecanol Triäthylenglycol
1,6-Hexandiol Pentaerythrit
Neopentylglycol Tris-hydroxyäthyl-isocyanurat
Thiodiäthylenglycol Di-hydroxyäthyl-oxalsäurediamid

1.9. Amide der β-(3,5-Di-tert.butyl-4-hydroxyphenyl)-propionsäure, wie z.B.

N,N'-Di-(3,5-di-tert.butyl-4-hydroxyphenylpropionyl)-hexamethylendiamin
N,N'-Di-(3,5-di-tert.butyl-4-hydroxyphenylpropionyl)-trimethylendiamin

N,N'-Di-(3,5-di-tert.butyl-4-hydroxyphenylpropionyl)-hydrazin

**2. UV-Absorber und Lichtschutzmittel**

2.1. 2-(2'-Hydroxyphenyl)-benztriazole, wie z.B. das 5'-Methyl-, 3,5'-Di-tert.butyl-, 5'-Tert.butyl-, 5'-(1,1,3,3-Tetramethylbutyl)-, 5-Chlor-3',5'-di-tert.butyl-, 5-Chlor-3'-tert.butyl-5'-methyl-, 3'-sec.Butyl-5'-tert.butyl-, 4'-Octoxy-, 3',5'-Di-tert.amyl-Deri-vat.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Tri-hydroxy-, 2'-Hydroxy-4,4'-dimethoxy-Derivat.

2.3. Ester von gegebenenfalls substituierten Benzoesäuren, wie z.B. 4-Tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester.

2.4. Acrylate, wie z.B. α-Cyan-β,β-diphenylacrylsäure-äthylester bzw. -isooctylester, α-Carbomethoxy-zimtsäuremethylester, α-Cyano-βmethyl-p-methoxy-zimtsäuremethylester bzw. -butylester. α-Carbomethoxy-p-methoxy-zimtsäure-methylester. N-(β-Carbomethoxy-β-cyanovinyl)-2-methyl-indolin.

2.5. Nickelverbindungen, wie z.B. Nickelkomplexe des 2,2'-Thio-bis-(4-(1,1,3,3-tetramethylbutyl)-phenols), wie der 1:1- oder 1:2-Komplex, gegebenenfalls mit zusätzlichen Liganden wie n-Butylamin, Triäthanolamin oder N-Cyclohexyl-diäthanolamin, Nickeldibutyldithiocarbamat, Nickelsalz von 4-Hydroxy-3,5-di-tert.butylbenzyl-phosphonsäure-monoalkylestern wie vom Methyl- oder Aethylester, Nickelkomplexe von Ketoximen wie von 2-Hydroxy-4-methyl-phenyl-undecylketonoxim, Nickelkomplexe des 1-Phenyl-4-lauroyl-5-hydroxy-pyrazols, gegebenenfalls mit zusätzlichen Liganden.

2.6. Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Aethoxy-2'-äthyl-oxanilid, N,N'-Bis-(3-dime-thylaminopropyl)-oxalamid, 2-Aethoxy-5-tert.butyl-2'-äthyl-oxanilid und dessen Gemisch mit 2-Aethoxy-2'-äthyl-5,4;di-tert.butyl-oxanilid, Gemische von ortho- und para-Methoxy- sowie von o- und p-Aethoxy-disubstituierte Oxaniliden.

**3. Metalldesaktivatoren,**

wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl:4-hydroxyphenylpropionyl)-hydrazin, 3-Salicyl-oylamino-1,2,4-triazol, Bis-benzylidenoxalsäuredihydrazid.

**4. Phosphite und Phosphonite,**

wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecyl-pentaerythrit-diphosphit, Di-(2,4-di-tert.butylphenyl)-pentaerythrit-di-phosphit, Tristearylsorbit-triphosphit, Tetrakis-(2,4-di-tert.butyl-phenyl)-4,4'-biphenylen-diphosphonit.

**5. Peroxidzerstörende Verbindungen,**

wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenz-imidazols, Zink-dibutyl-dithiocarbamat, Dioctadecyldisulfid, Penta-erythrit-tetrakis-(4-dodecylmercapto)-propionat.

**6. Polyamidstabilisatoren,**

wie z.B. Kupfersalze in Kombination mit Jodiden und/oder Phosphorverbindungen und Salze des zweiwertigen Mangans.

**7. Basische Co-Stabilisatoren,**

wie z.B. Melamin, Polyvinylpyrrolidon, Dicyandiamid, Triallylcyanurat, Harnstoff-Deri-vate, Hydrazin-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

**8. Nukleierungsmittel,**

wie z.B. 4-tert.Butylbenzoesäure, Adipinsäure, Diphenylessigsäure.

**9. Füllstoffe und Verstärkungsmittel,**

wie z.B. Calciumcarbonate, Silikate, Glasfasern, Asbest, Talk, Kaolin, Glinmer, Bariumsulfat, Metalloxide und -hydroxide, Russ, Graphit.

**10. Sonstige Zusätze**

, wie z.B. Weichmacher, Gleitmittel, Emulgatoren, Pigmente, Optische Aufheller, Flammschutzmittel, Antistatika, Treibmittel.

Der überraschende synergistische Effekt, welcher durch den Einsatz der erfindungsgemässen Stabilisatormischungen erzielt wird, wird durch die folgenden Beispiele illustriert:

**Beipiel 1: Lichtschutzwirkung in Polypropylen-Folien**

100 Teile Polypropylempulver (MFI 230°/2,16 kg ≈ 12) werden mit 0,05 Teilen Pentaerythrityl-tetrakis:3-(3,5-ditert.butyl-4-hydroxy-phenyl)-propionat, 0,05 Teilen Tris-(2,4-ditert.-butylphenyl)-phosphit und je 0,075 Teilen zweier Stabilisatoren der folgenden Tabelle im Brabenderplastographen bei 200°C während 10 Minuten homogenisiert. Die so erhaltene Masse wird möglichst rasch dem Kneter entnommen und in einer Kniehebelpresse zu einer 2-3 mm dicken Platte gepresst. Ein Teil des erhaltenen Rohpresslings wird ausgeschnitten und zwischen zwei Hochglanz-Hartaluminiumfolien mit einer Laborpresse wähend 6 Minuten bei 260° und 12 Tonnen Druck zu einer 0,1 mm dicken Folie gepresst, die unverzüglich in kaltem Waser abgeschreckt wird. Aus dieser werden nun Abschnitte von je 45 x 45 mm gestanzt und im Xenontest 1200 belichtet. Zu regelmässigen Zeitabständen werden diese Prüflinge aus dem Belichtungsapparat entnommen und in einem IR-Spektrophotometer auf ihren Carbonylgehalt geprüft. Die Zunahme der Carbonylextinktion bei der Belichtung ist ein Mass für den photooxidativen Abbau des Polymeren (s.L. Blaban et al., J. Polymer Sci. Part C, 22, 1059-1071 (1969); J.F. Heacock, J. Polymer Sci. Part A-1, 22, 2921-34 (1969); D.J. Carlsson and D.M. Wiles, Macromolecules 2, 587-606 (1969)) und ist erfahrungsgemäss mit einem Abfall der mechanischen Eigenschaften des Polymeren verbunden.

Als Mass der Schutzwirkung gilt die Zeit bis Erreichen einer Carbonylextinktion von 0,100.

Die Ergebnisse sind in der Tabelle 1 zusammengefasst.

**Tabelle 1: Lichtschutzwirkung in 0,1 mm PP-Folien**

| Stabilisatoren | Stunden Xenotest 1 200 bis 0,1 Carbonylestinktion ($T_{0,1}$) |
|---|---|
| Kontrolle | 280 |
| 0,075 % B-5 + 0,075 % A-1 | 3 750 |
| 0,075 % B-5 + 0,075 % A-10 | 2 650 |
| 0,075 % B-5 + 0,075 % A-11 | 3 100 |
| 0,075 % B-5 + 0,075 % A-12 | 2 850 |
| 0,075 % B-5 + 0,075 % A-5 | 3 300 |
| 0,075 % B-5 + 0,075 % A-3 | 2 900 |
| 0,075 % B-6 + 0,075 % A-1 | 3 200 |
| 0,075 % B-6 + 0,075 % A-11 | 2 600 |
| 0,075 % B-6 + 0,075 % A-12 | 2 500 |
| 0,075 % B-3 + 0,075 % A-1 | 2 900 |
| 0,075 % B-3 + 0,075 % A-11 | 2 600 |
| 0,075 % B-4 + 0,075 % A-1 | 3 200 |
| 0,075 % B-3 + 0,075 % A-12 | 2 400 |
| 0,075 % B-3 + 0,075 % A-3 | 2 650 |
| 0,075 % B-7 + 0,075 % A-1 | 4 100 |
| 0,075 % B-7 + 0,075 % A-12 | 2 650 |
| 0,075 % B-7 + 0,075 % A-3 | 2 600 |
| 0,075 % B-8 + 0,075 % A-1 | 3 800 |
| 0,075 % B-8 + 0,075 % A-3 | 2 800 |
| 0,075 % B-4 + 0,075 % A-3 | 2 800 |
| 0,075 % B-4 + 0,075 % A-4 | 2 950 |
| 0,075 % B-4 + 0,075 % A-8 | 2 700 |
| 0,075 % B-4 + 0,075 % A-7 | 3 400 |
| 0,075 % B-10 + 0,075 % A-1 | 4 200 |
| 0,075 % B-10 + 0,075 % A-8 | 3 100 |
| 0,075 % B-1 + 0,075 % A-3 | 2 200 |
| 0,075 % B-2 + 0,075 % A-11 | 3 300 |

**Beispiel 2: Lichtschutzwirkung in Polyrethan-Giessfolien**

100 Teile eines handelsüblichen, unstabilisierten Polyurethanharzes (®Estane 5707 F1) und je 0,25 Teile einer Komponente A und einer Komponente B, wie in der nachfolgenden Tabelle 2 angegeben, werden in 300 Teile eines 1:1-Gemisches von Dimethylformamid und Aceton gelöst. Um eine vollständige Lösung zu gewährleisten wird über Nacht geschüttelt. Dann wird die Polymerlösung auf Glasplatten gegossen, wobei eine Folie mit einer Dicke von 430 μ erhalten wird.

Die Folien werden auf der Glasplatte 4 Minuten bei 60°C und anschliessend 6 Minuten bei 140°C im Umluftofen getrocknet. Man erhält so eine trockene Giessfolie von 65 μm. Diese wird von der Glasplatte entfernt und in Testproben von 5 x 10 cm geschnitten.

Die Testproben werden solange in einem Xenotest 450 belichtet, bis ein Transmisionsverlust von 15 % bei 420 nm erreicht ist.

Die Resultate sind in der nachfolgenden Tabelle 2 aufgezeichnet:

**Tabelle 2: Lichtschutzwirkung in 65 μm dicken Polyurethan-Giessfolien**

| Stabilisatoren | Stunden Xenotest 450 bis 15 % Transmissionsverlust bei 420 nm |
|---|---|
| Kontrolle | 100 |
| 0,25 % A-1 + 0,25 % B-4 | 1 050 |
| 0,25 % A-1 + 0,25 % B-5 | 1 000 |
| 0,25 % A-10 + 0,25 % B-5 | 950 |

**Beispiel 3: Lichtschutzwirkung in Kristall-Polystyrol**

100 Teile Kristall-Polystyrol-Pellets werden trocken mit je 0,1 Teilen einer Komponente A und einer Komponente B, wie in der nachfolgenden Tabelle 3 angegeben, vermischt und die trockene Mischung wird dann durch Extrusion homogenisiert. Die stabilisierten Pellets, die man so erhält werden zu Platten von 2 mm Dicke spritzverformt. Diese Platten werden während 2000 Stunden im Weather-0-Meter WRC 600 belichtet und der Yellowness Index (YI) nach ASTM D 1925/70 gemessen.

Die Resultate sind in der nachfolgenden Tabelle 3 aufgezeichnet:

**Tabelle 3: Lichtschutzwirkung in 2 mm Kristall-lystyrol-Polystyrol-Spritzgussplatten**

| Stabilisatoren | YI nach 2 000 Stunden Weather-O-Meter WRC 600 |
|---|---|
| Kontrolle | 49,8 |
| 0,1 % A-1 + 0,1 % B-4 | 15,7 |
| 0,1 % A-10 + 0,1 % B-5 | 25,5 |

**Patentansprüche**

1. Stabilisatorsystem enthaltend (A) ein niedermolekulares sterisch gehindertes Polyalkylpiperidin, ausgewählt aus der Gruppe bestehend aus den Verbindungen der Formeln (A-l) bis (A-12)

$R_1-OC(O)-(CH_2)_8-C(O)O-R_1$ (A-1), $R_2-OC(O)-(CH_2)_8-C(O)OR_2$ (A-2), $R_1-NH-(CH_2)_6-NH-R_1$ (A-3), $R_2-OCH_2CH=CHCH_2-O-R_2$ (A-4), $R_1-OC(O)-N(R_1)-(CH_2)_6-N(R_1)C(O)O-R_1$ (A-5), $R_1-O-Si(CH_3)_2-O-R_1$ (A-6),

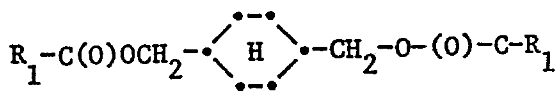

(A-7),

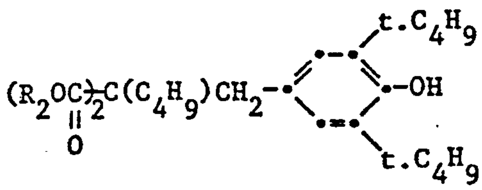

(A-8),

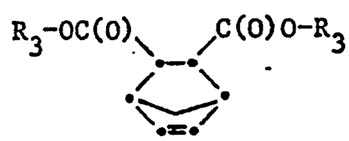

(A-9)

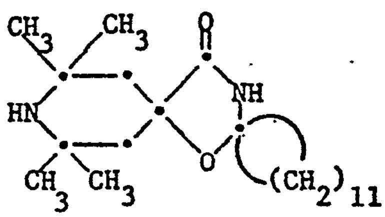

(A-10),

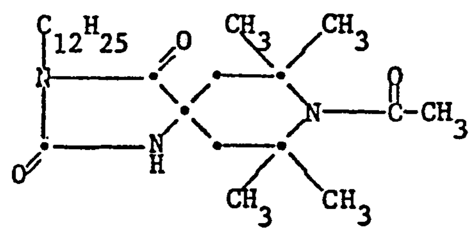

(A-11),

$R_1-NH-C(O)-(CH_2)_8-C(O)-NH-R_1$ (A-12)

worin $R_1$ eine Gruppe der Formel

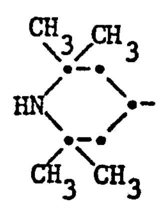

,

$R_2$ eine Gruppe der Formel 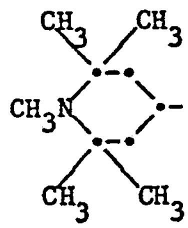 und $R_3$ eine Gruppe der Formel

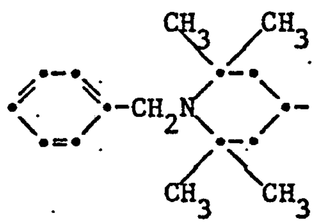 bedeutet,

und (B) ein hochmolekulares sterisch gehindertes Polyalkylpiperidin ausgewählt aus der Gruppe bestehend aus Verbindungen nit einer der wiederkehrenden Einheiten der Formeln (B-1) bis (B-9)

$$-[-CH(COO-R_2)-CH_2-]-$$

(B-1)

mit Polymerisationsgrad 5-100

$$-[-N(R_1)-(CH_2)_6-N(R_1)-CH_2)_2-]-$$

(B-2)

mit Polymerisationsgrad 5-50

$$-[-CH(COO-R_1)-CH_2-]-[-CH_2-CH_2-]$$

(I) (II)

(B-3)

mit Molverhältnis I:II = 1:10 bis 1:20 und Molekulargewicht zwischen 10000 und 30000

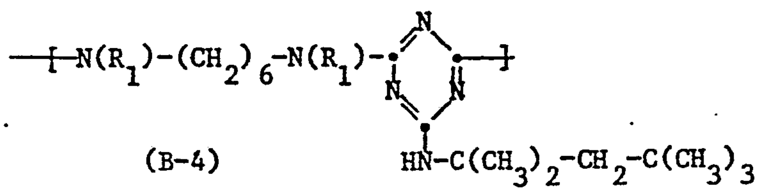

(B-4)

mit Polymerisationsgrad 3-50,

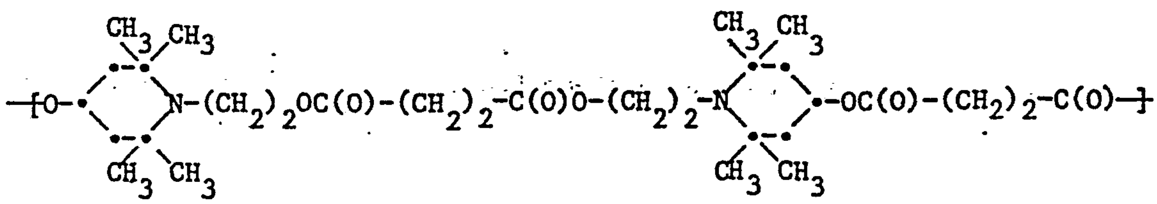

(B-5)

mit Polymerisationsgrad 2-25,

$$-[-N(R_1)-(CH_2)_6-N(R_1)-C(O)-(CH_2)_4-C(O)-]-$$

(B-6)

mit Polymerisationsgrad 5-50

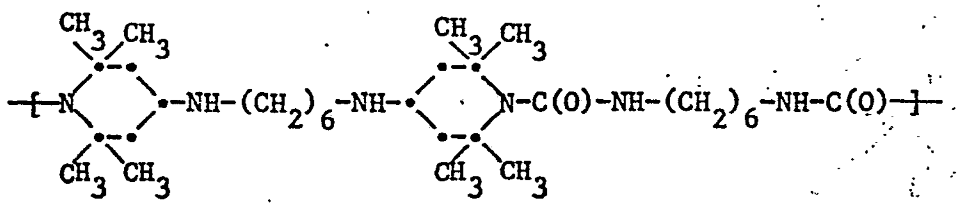

(B-7)

mit Polymerisationsgrad 5-50

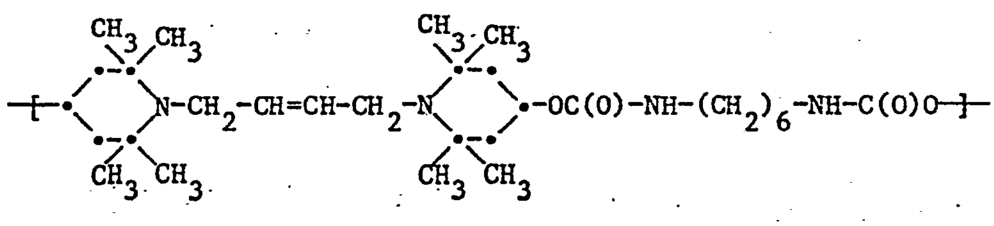

(B-8)

mit Polymerisationsgrad 5-50

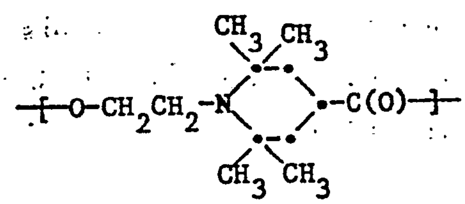

(B-9)

mit Polymerisationsgrad 5-50
sowie aus der Verbimdung der Formel B-10

$$R_4NH(CH_2)_3-N(R_4)-(CH_2)_2-N(R_4)-(CH_2)_3-NHR_4$$

(B-10)

wobei $R_1$ und $R_2$ die oben angegebene Bedeutung haben und $R_4$ eine Gruppe

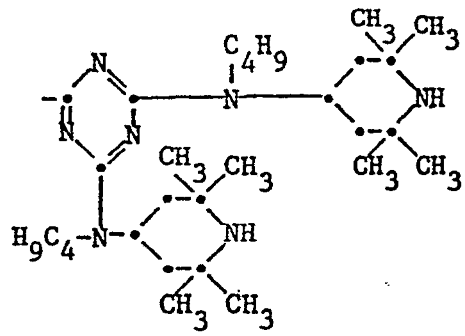

ist.

2. Stabilisatorsystem nach Anspruch 1, enthaltend als Komponente (A) eine Verbindung (A-1) (A-2) (A-5) (A-7) (A-8) (A-10) oder (A-11).

3. Stabilisatorsystem nach Anspruch 1, enthaltend als Komponente (B) eine Verbindung (B-I), (B-2), (B-3), (B-4), (B-5), (B-6) oder (B-10).

4. Stabilisatorsystem nach Anspruch 1, enthaltend als Komponente (A) eine Verbindung (A-1), (A-5), (A-8), (A-10) oder (A-11).

5. Stabilisatorsystem nach Anspruch 1, enthaltend die Komponenten (A) und (B) in einen Verhältnis von 10:1 bis 1:10.

6. Stabilisatorsystem nach Anspruch 5, enthaltend die Komponenten (A) und (B) in einem Verhältnis von 5:1 bis 1:5.

7. Organisches polymeres Material enthaltend das Stabilisatorsystem nach Anspruch 1.

8. Organisches polymeres Material gemäss Anspruch 7, enthaltend 0,01 bis 5 Gew.-%, bezogen auf das organische Material, des Stabilisatorsystems nach Anspruch 1.

## Claims

1. A stabiliser system containing (A) a lowmolecular, sterically hindered polyalkylpiperidine selected from the group comprising the compounds of the formulae (A-1) to (A-12)

$R_1$-OC(O)-$(CH_2)_8$-C(O)O-$R_1$ (A-1), $R_2$-OC(O)-$(CH_2)_8$-C(O)O$R_2$ (A-2),

$R_1$-NH-$(CH_2)_6$-NH-$R_1$ (A-3), $R_2$-$OCH_2CH=CHCH_2$-O-$R_2$ (A-4),

$R_1$-OC(O)-N($R_1$)-$(CH_2)_6$-N($R_1$)C(O)O-$R_1$ (A-5),

$R_1$ -O-Si$(CH_3)_2$- O-$R_1$ (A-6),

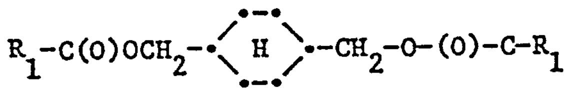 (A-7),

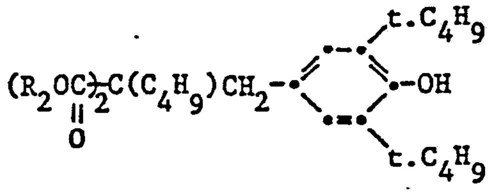 (A-8), 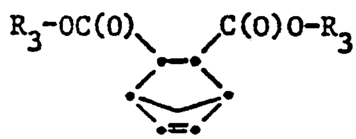 (A-9)

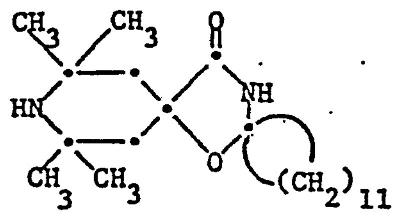 (A-10), 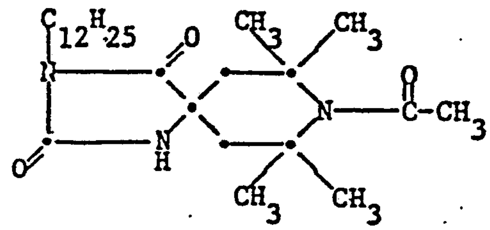

(A-11),

$R_1$-NH-C(O)-$(CH_2)_8$-C(O)-NH-$R_1$ (A-12)
in which $R_1$ is a group of the formula

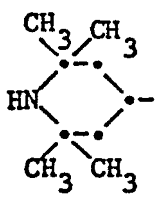 ,

$R_2$ is a group of the formula

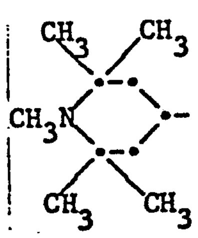

and
$R_3$ is a group of the formula

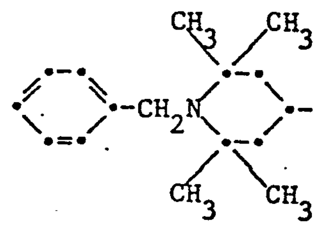

and (B) a high-molecular sterically hindered polyalkylpiperidine selected from the group comprising compounds having one of the recurring units of the formulae (B-1) to (B-9):

$$-[-CH(COO-R_2)-CH_2-]-$$

(B-1)

with degree of polymerisation of 5-100,

$$-[-N(R_1)-(CH_2)_6-N(R_1)-CH_2)_2-]-$$

(B-2)

with degree of polymerisation of 5-50,

$$-[-CH(COO-R_1)-CH_2-]- \quad -[-CH_2-CH_2-]-$$

(I) (II)

(B-3)

with molar ratio I:II = 1:10 to 1:20 and molecular weight in the range from 10,000 to 30,000,

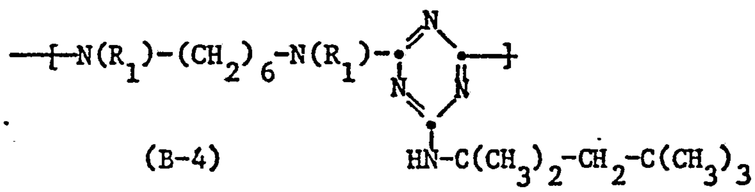

(B-4)

with degree of polymerisation of 3-50,

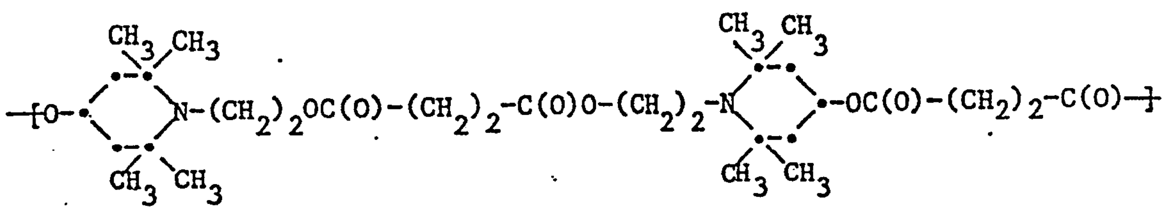

(B-5)

with degree of polymerisation of 2-25,

$$-\!\!\left[ N(R_1)-(CH_2)_6-N(R_1)-C(O)-(CH_2)_4-C(O) \right]\!\!-$$

(B-6)

with degree of Polymerisation of 5-50,

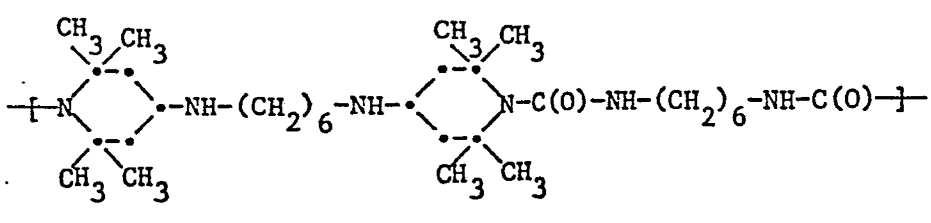

(B-7)

with degree of polymerisation of 5-50,

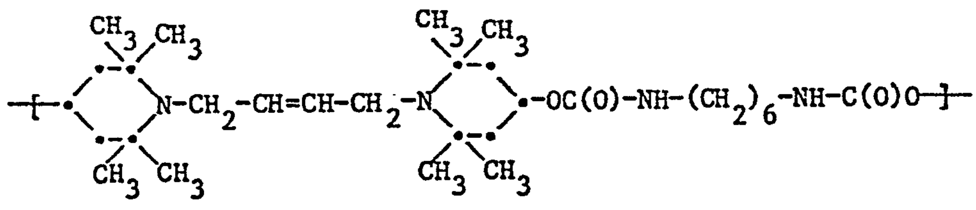

(B-8)

with degree of polymerisation of 5-50,

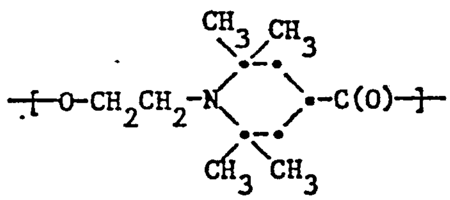

(B-9) .

with degree of polymerisation of 5-50,
and also the compound of the formula B-10

$$R_4NH(CH_2)_3-N(R_4)-(CH_2)_2-N(R_4)-(CH_2)_3-NHR_4$$

(B-10) .

wherein $R_1$ and $R_2$ are as defined above, and $R_4$ is a group

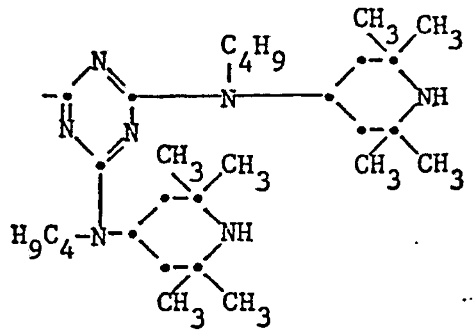

2. A stabiliser system according to claim 1, containing a compound (A-1), (A-2), (A-5), (A-7), (A-8), (A-10) or (A-11) as the component (A).

3. A stabiliser system according to claim 1, containing a compound (B-1), (B-2), (B-3), (B-4), (B-5), (B-6) or (B-10) as the component (B).

4. A stabiliser system according to claim 1, containing a compound (A-1), (A-5), (A-8), (A-10) or (A-11) as the component (A).

5. A stabiliser system according to claim 1, containing the components (A) and (B) in a ratio of 10:1 to 1:10.

6. A stabiliser system according to claim 5, containing the components (A) and (B) in a ratio of 5:1 to 1:5.

7. Organic polymeric material containing the stabiliser system according to claim 1.

8. Organic polymeric material according to claim 7 containing 0.01 to 5% by weight, based on the organic material, of the stabiliser system according to claim 1.

**Revendications**

1. Système stabilisant contenant (A) une polyalkylpipéridine à bas poids moléculaire et à empêchement stérique prise dans l'ensemble constitué par les composés répondant aux formules (A-1) à (A-12):

$R_1-OC(O)-(CH_2)_8-C(O)O-R_1$ (A-1), $R_2-OC(O)-(CH_2)_8-C(O)OR_2$ (A-2),
$R_1-NH-(CH_2)_6-NH-R_1$ (A-3), $R_2-OCH_2CH=CHCH_2-O-R_2$ (A-4),
$R_1-OC(O)-N(R_1)-(CH_2)_6-N(R_1)C(O)O-R_1$ (A-5), $R_1-O-Si(CH_3)_2-O-R_1$ (A-6),

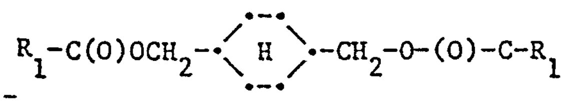
(A-7),

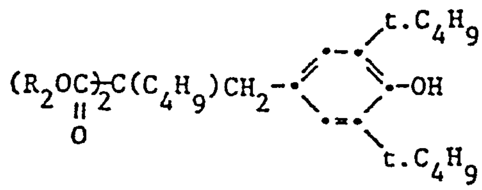
(A-8),

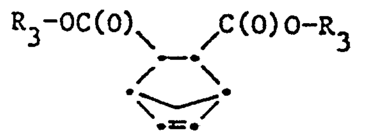
(A-9)

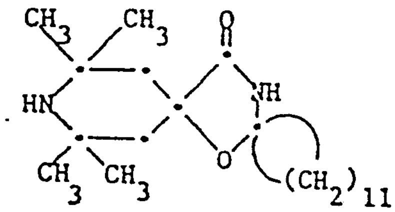
(A-10),

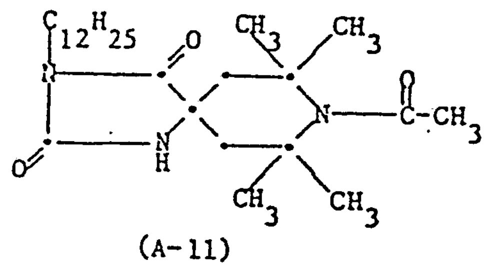
(A-11)

$R_1-NH-C(O)-(CH_2)_8-C(O)-NH-R_1$ (A-12),

formules dans lesquelles:
$R_1$ représente un radical de formule

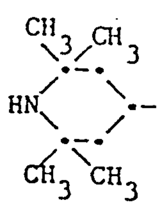
,

$R_2$ représente un radical de formule

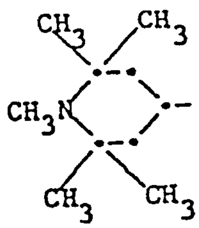

et

$R_3$ représente un radical de formule

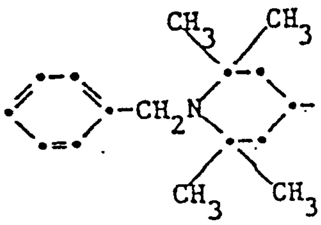

,

et

(B) une polyalkyl-pipéridine à haut poids moléculaire et à empêchement stérique choisie dans l'ensemble constitué par les composés comportant un des motifs récurrents de formules (B-1) à (B-9)

$$-[CH(COO-R_2)-CH_2]-$$

(B-1)

avec un degré de polymérisation de 5 à 100,

$$-[N(R_1)-(CH_2)_6-N(R_1)-CH_2)_2]-$$

(B-2)

avec un degré de polymérisation de 5 à 50,

$$-[CH(COO-R_1)-CH_2]- \quad -[CH_2-CH_2]-$$

(I) (II)

(B-3)

avec un rapport molaire de (I) à (II) compris entre 1:10 et 1:20 et une masse moléculaire comprise entre 10000 et 30000,

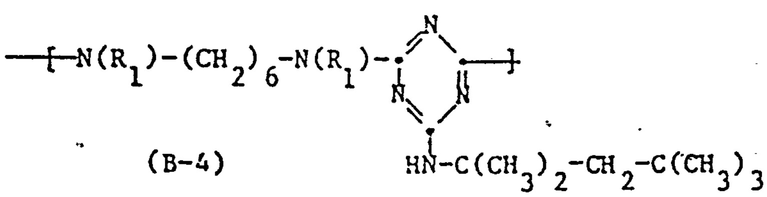

(B-4)

avec un degré de polymérisation de 3 à 50,

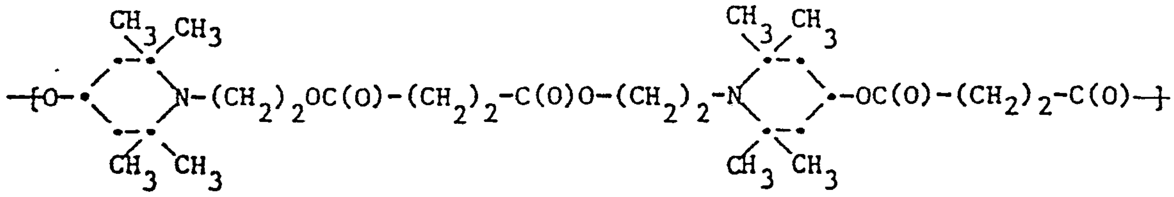

(B-5)

avec un degré de polymérisation de 2 à 25,

$$-[N(R_1)-(CH_2)_6-N(R_1)-C(O)-(CH_2)_4-C(O)]-$$

(B-6)

avec un degré de polymérisation de 5 à 50,

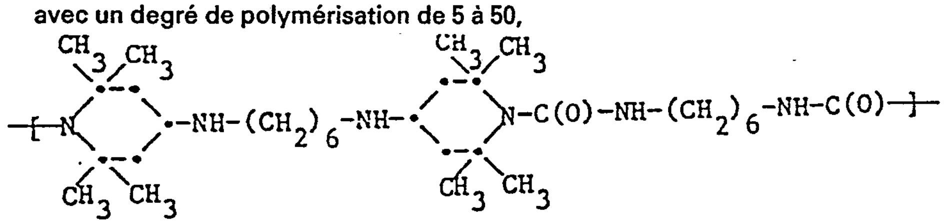

(B-7)

avec un degré de polymérisation de 5 à 50,

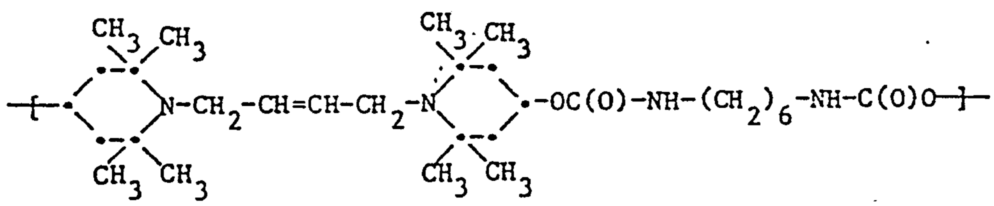

(B-8)

avec un degré de polymérisation de 5 à 50,

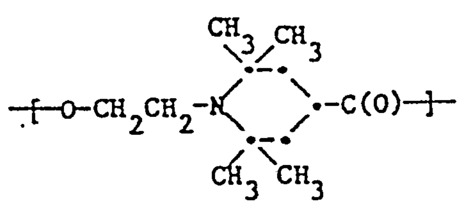

(B-9)

avec un degré de polymérisation de 5 à 50, ainsi que par les composés de formule B-10:

$R_4NH(CH_2)_3-N(R_4)-(CH_2)_2-N(R_4)-(CH_2)_3-NHR_4$

(B-10),

formules dans lesquelles $R_1$ et $2_2$ ont les significations précédemment données et $R_4$ représente un radical de formule:

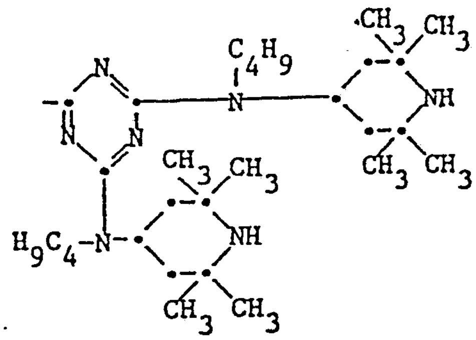

2. Système stabilisant selon la revendication 1, qui contient, comme composante (A), un composé (A-1), (A-2), (A-5), (A-7), (A-8), (A-10) ou (A-11).

3. Système stabilisant selon la revendication 1, qui contient, comme composante (B), un composé (B-1), (B-2), (B-3), (B-4), (B-5), (B-6) ou (B-10).

4. Système stabilisant selon la revendication 1, qui contient, comme composante (A), un composé (A-1), (A-5), (A-8), (A-10) ou (A-11).

5. Système stabilisant selon la revendication 1, qui contient les composantes (A) et les composantes (B) dans un rapport compris entre 10:1 et 1:10.

6. Système stabilisant selon la revendication 5, qui contient les composantes (A) et les composantes (B) dans un rapport compris entre 5:1 et 1:5.

7. Matière polymère organique qui contient le système stabilisant selon la revendication 1.

8. Matière polymère organique selon la revendication 7 qui contient de 0,01 à 5% en poids, par rapport à la matière organique, du système stabilisant selon la revendication 1.